# EUROPEAN PATENT SPECIFICATION

(11) **EP 4 171 207 B1**
(45) Date of publication and mention of the grant of the patent: **09.12.2026**
(21) Application number: 21710649.1
(22) Date of filing: 05.02.2021
(51) Int. Cl.: A01K 75/00, B08B 11/00, B62D 55/26

(54) **AQUACULTURE NET CLEANER TRACK BELT**
RAUPENBAND FÜR AQUAKULTUR-NETZREINIGER
BANDE DE CHENILLE POUR NETTOYEUR DE FILETS D'AQUACULTURE

(30) Priority: 07.02.2020 US 202062971341 P
(43) Date of publication of application: 03.05.2023
(73) Proprietor: Lindgren, Peter B., Pompano Beach, FL 33064 (US)
(72) Inventor: Lindgren, Peter B., Pompano Beach, FL 33064 (US)
(74) Representative: Patentanwälte Dr. Keller, Schwertfeger Partnerschaft mbB
(86) International application number: PCT/US2021/016783
(87) International publication number: WO 2021/158895

(56) References cited:
- WO-A1-2018/199767
- CA-A1- 3 087 596
- JP-A- S5 470 983
- NO-B1- 344 404
- US-A1- 2003 006 646
- US-B1- 6 264 294

## Description

### FIELD OF THE INVENTION

This invention is related to the field of open ocean aquaculture and, in particular, to improvements in a track belt for cleaning nets used in aquaculture.

### BACKGROUND OF THE INVENTION

The offshore fish farming industry has continued to grow, fueled by advancements in aquaculture processes. Unfortunately, such advancements have created, or enhanced, various fish farming problems. A most notable problem is sea lice now found on farm raised salmon fish; sea lice infestation has increased as much as ten-fold in some areas. Further, the spread of sea lice is occurring from farm to farm, which further accelerates the infestation. Cleanliness of the net that forms the fish cage has been recognized as a significant contributor to the problem. Studies have also shown that better water flow with clean nets results in more oxygenated water into the cage. With proper oxygenation, the fish eat better, are healthier, grow quicker, and are less susceptible to the sea lice infestation. For this reason, cleaning of a cage in some areas has increased from a few times a year to several times a month. It has also been recognized that the cleaning of the bottom of the cage, previously neglected due to the difficulty in cleaning the bottom, is extremely beneficial. However, hand cleaning nets on a regular schedule can be problematic due to weather conditions.

Various mechanical net cleaners exist in the industry. For instance, a commonly used net cleaner system employs high pressure water and thrusters operated by remote control from a vessel using a video monitor to view the operation. However, these systems require large vessels so they are able to address the net cleaning demands in poor weather conditions; and, while effective, the use of high pressure water and thrusters is inefficient.

Flat track belts use on ROV's (remote operated vehicles) are known in the industry and used to produce articulated movement of a cleaning head. However, all known track belts lack traction and conventional grippers risk tearing the net, which would allow fish to escape, or predators to enter the tear in the net. Further complicating the net cleaning process is equipment in the net that must be avoided during cleaning. Equipment installed in the bottom of the cages can include fish mortality removal systems, systems that improve water flow, and shelters for cleaner fish used to eat sea lice off the salmon.

Examples of ROV's used with underwater net cleaning systems include: Yanmar Osterbo, Speere, NetRobot Morenot, Stealth Cleaner, and MPI. All such systems employ water thrusters or flat belts with high pressure water cleaning.

Flat belts, tires and tracks are known in the prior art for special use and performance applications, and may be found on cars, trucks, excavators, crawlers, snow mobiles and all-terrain vehicles. For instance, Harms, U.S. Patent No. 5,375,640, discloses a tire for an ATV that includes a long and a short lug and additional lugs in the shape of a frustum of a pyramid or cone to provide traction in deep mud or sand.

Rodgers, U.S. Patent No. 6,913,329, discloses an endless vehicular rubber track made with improved rubber composition, also showing a common track and sprocket design.

Sivertsen, U.S. Patent No. 9,174,711, discloses a system for maneuvering cleaning apparatus for removing fouling from marine installations including an improved jet nozzle.

Blackburn, U.S. Patent No. 10,427,736, discloses a tungsten carbide threaded stud wear resistant member and method to produce for a drive track or belt.

LeBlanc, U.S. Patent No. 9,878,750, discloses shapes for the inside or driven side of a continuous belt. The current invention technology is used to propel from the outside of a track on a net.

Tire construction is often reinforced with belts of nylon, steel or other high tensile material to control stretching of the elastomer or creep. The reinforcing belt is commonly a continuous length with several revolutions overlapping to form an endless assembly. On conveyor and other belts formed from segments, the segment attachment is usually a metal gripping assembly on each end of a segment with a rod inserted between the ends of the segments to form a continuous loop. Belts commonly have a tightening means to adjust the tension. Belt failure is usually at the attachment.

Previous developments for track belts or wheel traction do not address the problems for applications on an offshore fish cage. Several net cleaners have been developed with brushes, elastomeric hooks and other cleaning features, but they also are not suitable for advancing a net cleaner to suitable speeds and safety. Prior art net cleaners with track belts are known from the patent documents NO344404B1, CA3087596A1 and WO2018199767A1.

What is lacking in the industry is a track belt specifically designed for use with a net cleaner to provide a highly articulated propulsion system that will not damage a net.

### SUMMARY OF THE INVENTION

The invention relates to an improved track belt drive system for use with a net cleaner, as defined in claim 1 . The track belt provides secure propulsion and a high degree of articulation so as to allow efficient navigation of a net being cleaned without damage to the net. The track belt includes elastic engagement stumps protruding from a base of the belt, with studs mounted on an extended end of the stumps used to engage the net and propel the net cleaner. The stumps flex to insure that, if excessive pressure is applied to the stud, the stump will bend and the net will release without damage. A guard limits the stump engagement level and prevents the stumps from tearing the net. The track belt is formed in segments with continuous reinforcing made possible by placement of strap reinforcements in molded segments under tension in a way that the belt reinforcements will not fail at the intersection of the adjoining segments.

An objective of the invention is to provide a track belt drive system for a net cleaner that is efficient and will not damage a net.

Still another objective is to provide a track belt that will not lead to fish mortality or fish escapes.

Another objective of the invention is to allow a method of making track belt segments wherein reinforcing is performed in a mold under tension.

Still another objective of the invention is to provide a track belt drive system that can be used on nets having openings as large as 5 inches.

Still another objective of the invention is to provide stump and stud design features that can change to accommodate different nets to be cleaned.

Yet another objective of the invention is to provide a track belt drive system that can be adjusted for speed, force, and maneuverability, providing reliability and low maintenance to a net cleaning system.

An advantage of the invention is to provide a track belt formed from segments which provide positive control without being too aggressive.

Other objectives and further advantages and benefits associated with this invention will be apparent to those skilled in the art from the description, examples and claims which follow.

### BRIEF DESCRIPTION OF THE DRAWINGS

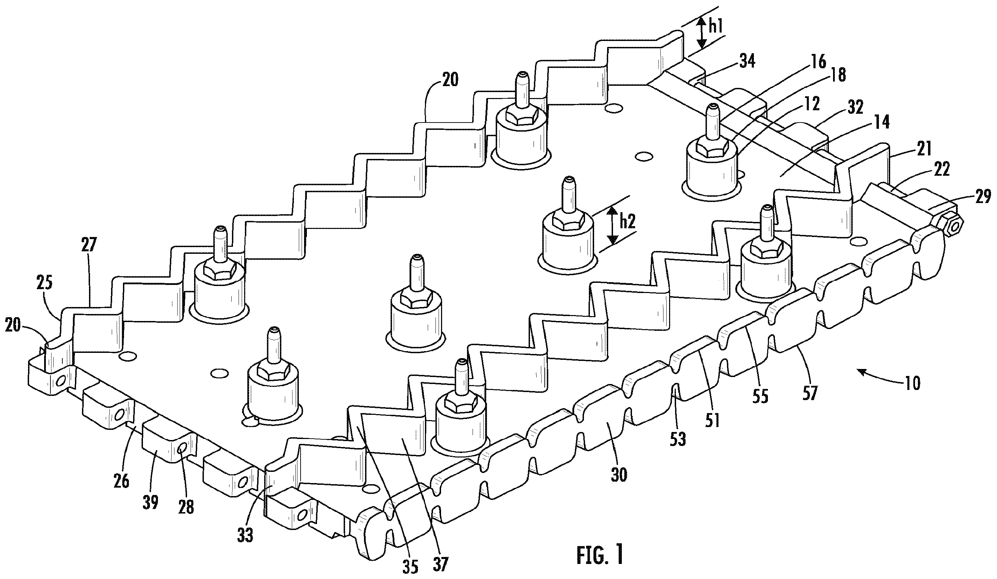

Figure 1 is a perspective view of a track belt segment of the instant invention;
Figure 2 is a perspective view of a plurality of track belt segments coupled together;

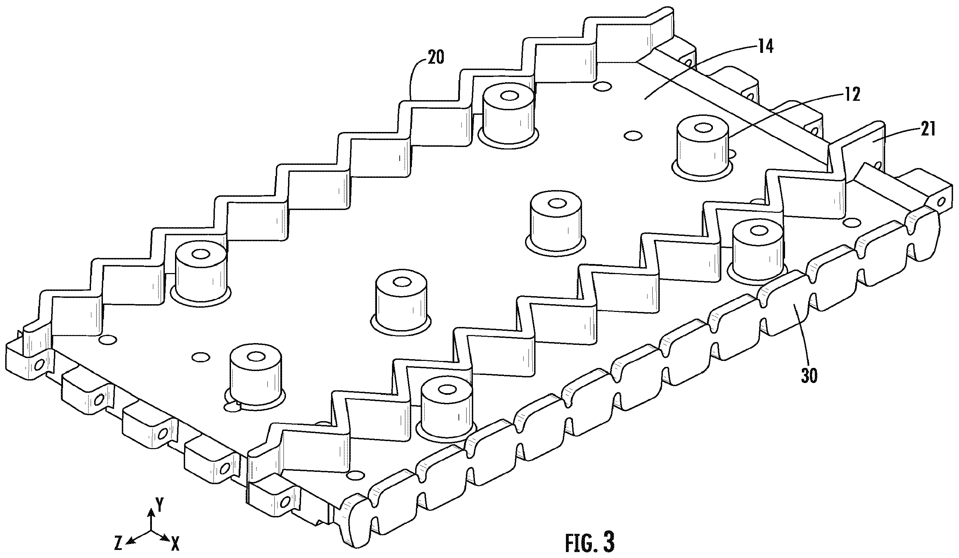

Figure 3 is a perspective view of a track belt segment without studs;
Figure 4 is a cut-away view of a track belt segment;
Figure 5 is a cross-sectional side view of a track belt segment;
Figure 6 is a perspective view of a straight stud;
Figure 7 is a perspective view of a round head stud;
Figure 8 is a perspective view of a cone shaped stud;
Figure 9 is a cross-sectional top view of an alternative embodiment of a track belt segment;
Figure 10 is a perspective view thereof;
Figure 11 is a perspective view of a stud;
Figure 12 is a cross-sectional view of a track belt segment with studs;
Figure 13 is a cross-sectional view of a track belt segment without studs;
Figure 14 is a perspective view of three adjoining track belt segments;
Figure 15 is a front right perspective view of a mounted track belt;
Figure 16 is a front left perspective view thereof;
Figure 17 is a side view thereof; and
Figure 18 is an end view of the mounted track belt.

### DETAILED DESCRIPTION OF THE PREFERRED EMBODIMENT

A detailed embodiment of the instant invention is disclosed herein; however, it is to be understood that the disclosed embodiments are merely exemplary of the invention, which may be embodied in various forms. Therefore, specific functional and structural details disclosed herein are not to be interpreted as limiting, but merely as a basis for the claims and as a representation basis for teaching one skilled in the art to variously employ the present invention in virtually any appropriately detailed structure.

Referring to the figures in general, the drive system consists of a track belt formed from segments 10, wherein a plurality of segments 10 are coupled together to form a track belt. Each segment 10 employs elastic engagement stumps 12 protruding from a base member 14 with studs 16 protruding from a distal end 18 of each of the stumps 12. The base member 14 uses the elastomeric stumps 12 to advance the net cleaning machine by being flexible, eliminating the chance of tearing the net when used in conjunction with guards 20, 21. The stumps 12 engage a net, not shown, providing underwater traction to propel a net cleaner employing the track belt. The stumps 12 flex to insure that, if excessive pressure is applied to a stud 16, the stump 12 will bend and the net will release without damage. The guards 20, 21 provide spacing to prevent the stumps 12 from entangling the net that forms the fish cage.

In an embodiment, each stump 12 is produced from 70 to 90 A shore durometer polyurethane, and will flex at a design load to prevent net damage. The guards 20, 21 protruding from the base member 14 of the belt segment 10 have approximately the height h1 equal to the height h2 of each stump 12, less the stud prevents the net from entering a position lower than the stump 12 to assure higher than design loads cannot be transferred to the net. Features are attached to, or produced with, the stump top distal end 18 may be elastomeric, metal, plastic or other suitable stud 16 features to engage and act to give traction. In an embodiment, the studs 16 can be made of various shapes, and the guards 20, 21 may be segmented or continuous. If the guards 20, 21 are continuous, excessive stiffness can be avoided by the use of a zigzag shape, such as depicted on guard 20 having alternating facing walls 25, 27 and guard 21 having alternating facing walls 35, 37.

A first end wall 26 includes a plurality of connectors 39, each having an aperture for receipt of a pin. Second end wall 29 includes a plurality of offset connectors 32 with an aperture 34 to receive a pin 22 for adjoining another segment 10, the pin 22 releasably secured by a fastening nut 24.

The edge of the base member 14 has a track guide 30, having a plurality of peaks 51 and valleys 53 defined from a top edge 55 and a bottom edge 57 which interface with teeth, not shown, on the drive wheel 206.

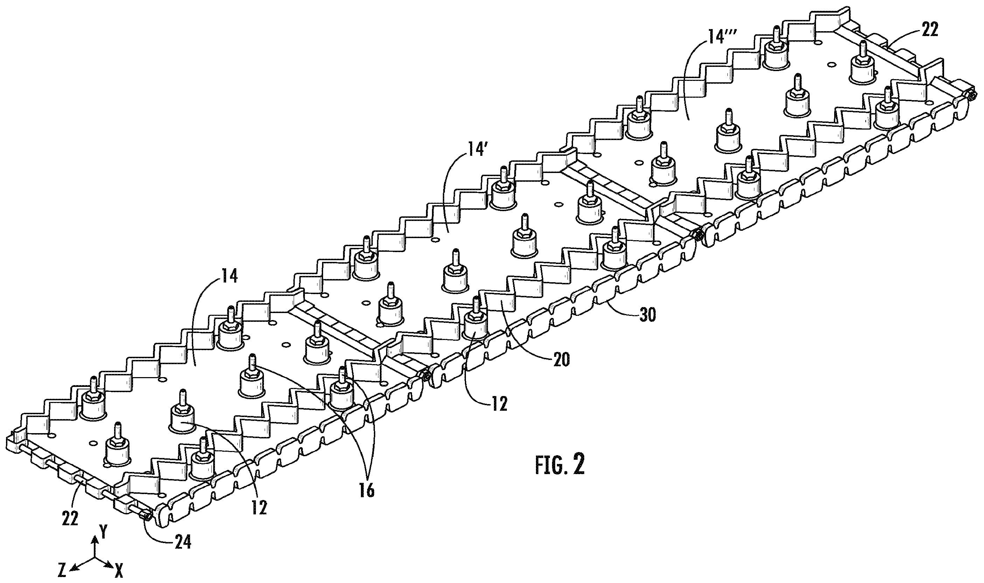

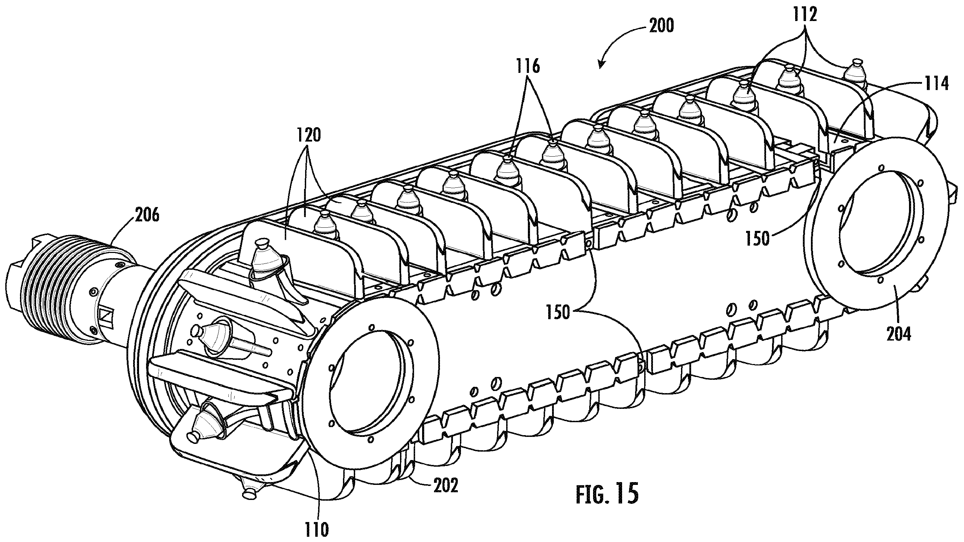

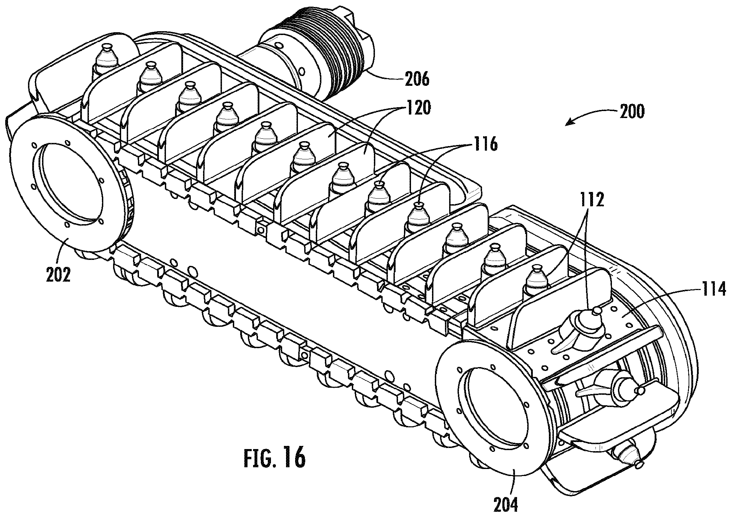

The base member 14 is produced with molded elastomer sections, having between a 70 to 90 A shore durometer, which are hingedly coupled with adjoining base members by a series of connectors 39 and offset connectors 32. As illustrated in Figure 2, adjoining base members 14 and 14' are coupled together with a pin 22 placed through the connectors and held in place by the nut 24. Another base member 14" can be coupled to the adjoining base 14' and so forth, so as to produce a continuous track belt. The track belt is driven by a drive wheel 206, as illustrated in Figures 15-17.

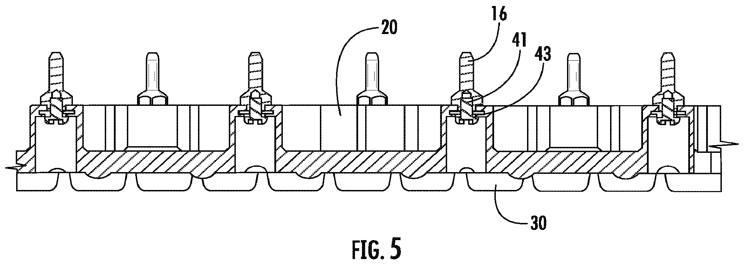

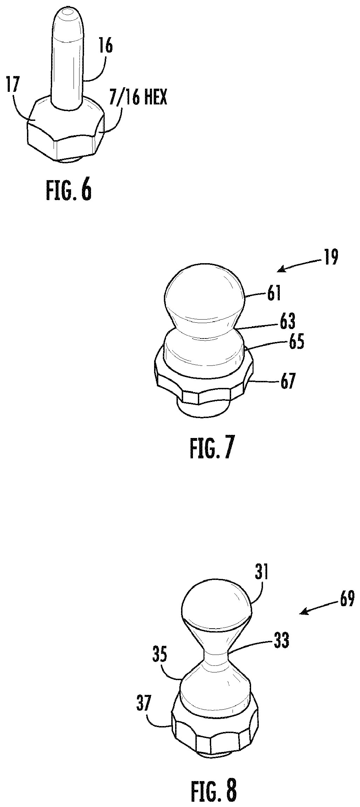

Various tips or studs 16, designed for attachment on top of a stump 12, are disclosed. One basic type is a stud 16 formed integral with a threaded hex nut 17, illustrated in Figure 6, wherein the hex nut is 7/16 inch. Figure 7 illustrates a round stud 19 having a head portion 61, neck portion 63, and an enlarged base 65 with a 7/16 inch threaded hex nut 67. Figure 8 illustrates a cone shaped stud 69 having a head portion 31, a cone shaped neck portion 33, and a cone shaped base 35 with a 7/16 inch threaded hex nut 37. As illustrated in Figure 5, the stud 16 is attached to the stump 12 with a screw 41 and washer 43. Another example is when the stump that is designed for attachment is formed from a different material, such as a steel spike, that can withstand more wear and include more articulated shapes. The attached stud may be attached with a screw or fastener, or insert molded in as the track is formed.

Simple cylindrical studs can work, but the articulated shapes improve performance. When using a simple cylindrical stud, it is preferred that they slope as the stump bends. The angle they form with the net pushes the net away prior to release. When push away from the net force is high and not desirable for a domed stud tip to enter the net opening followed by a reduced lower cone shape to hold the net better. The effect is like a button in a hole with a sloped area for design specific release.

Effectively, the instant invention forces the net cleaner into the net to be cleaned. The force pushes the top end of the stud to protrude into the net openings to engage and advance the net cleaner as the track is propelled forward. Underwater driving loads increase with cleaning speeds of up to 3 feet per second, and the stump bends slightly as the cleaner moves forward at higher speeds. Also, there are increased loads on the stumps and studs during turns, entanglement, collision or the like. Under the higher loads, the stump will slope and the net will slide off the stud as designed, preventing net damage. The tips will also affect pushing the net away at a tangential force that may or may not be desirable.

When the tangential force is not desirable, or more force is required, a more articulated tip for the stump 12 is desirable. A larger rounded first entry end from .25 to .5 inches (0,64 - 1,27 cm) outer diameter is used to enter the net opening with a sloped shape from the outer diameter toward the axis of the part, producing a cone shape from the rounded first end diameter, extending and ending at approximately .125 inches (0,32 cm) Slopes from 15 to 45 degrees have been used. This design gives a more positive force on the net with a specific sudden release.

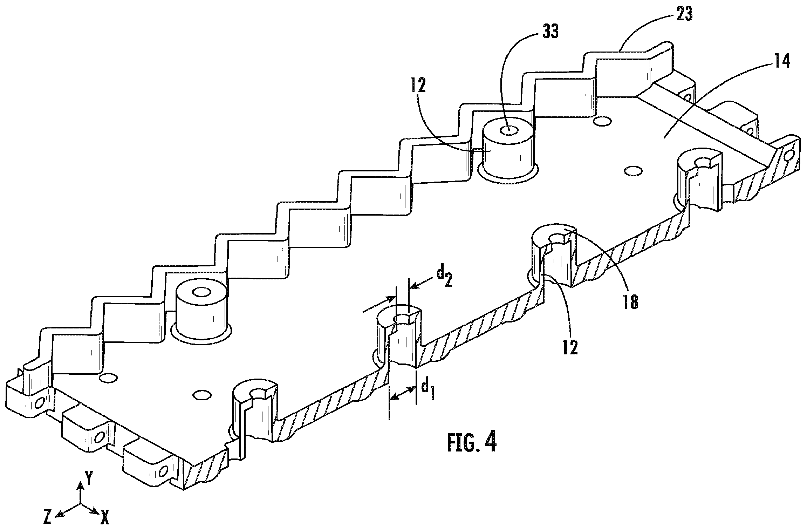

The rigidness of the stump, shape of the stud, specifications and shape of the net, and number of features on the track determine the traction of the track. Figure 4 shows current features tested, including a stump 12 that is .75-1.0 inches (1,9 - 2,54 cm) tall h1 with a hollow inside diameter d1 of .375 (inch (0,95 cm), 125 (0,32 cm) short of the extended end and a .125 inch (0,32 cm) d2 thru hole 33 to allow attachment of the tip with a screw. The finished stud appears similar to the top of a bowling pin or chess pawn. In Figure 2, multiple segments are depicted with the stump 12 and stud 16 with a 1.25 inches (3,18 cm) total length; alternate designs are for use with different nets. Designs that have been successful have ranged from a straight vertical stud with pull power of 4-5 pounds (17,79 - 22,24 N) force each, to articulated studs with an angle from vertical of 22 degrees with a pulling force of 9 to 12 pounds (40,03 - 53,38 N) each. Studs engaging the net from 8-20 pounds (35,59 - 88,96 N) have been useful to move a neutral buoyancy cleaner to sufficient speeds. Current limited production is produced in segments of approximately 12 inches (30,48 cm) in length connected together in a hinge type design.

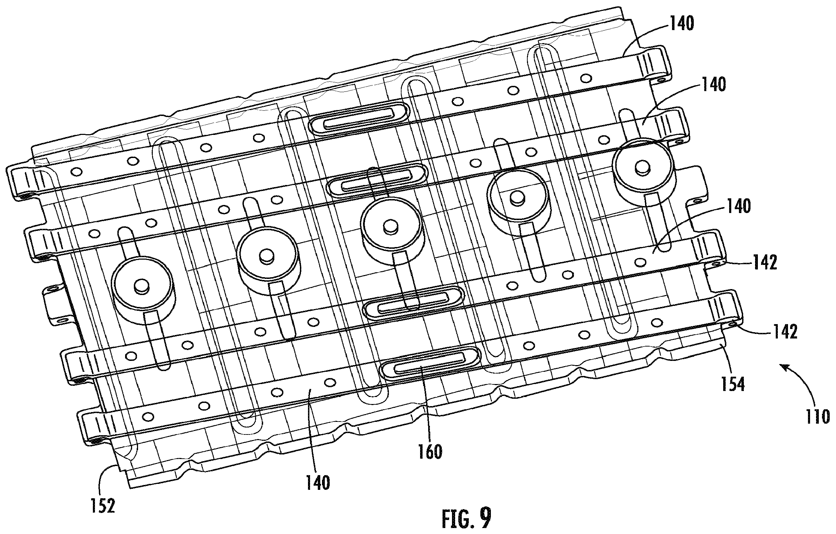

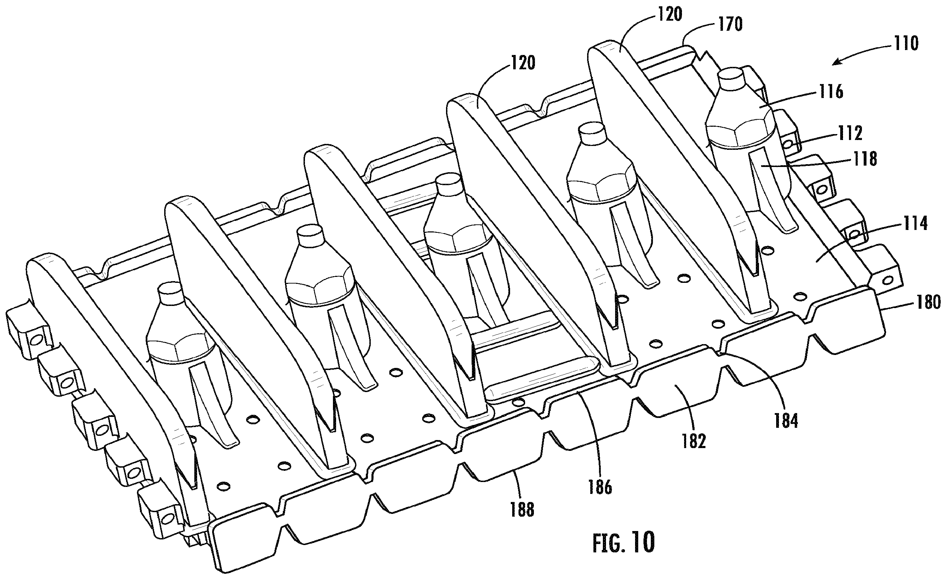

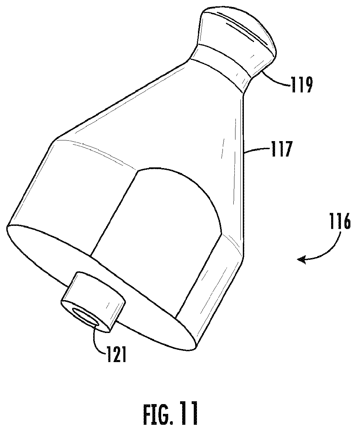

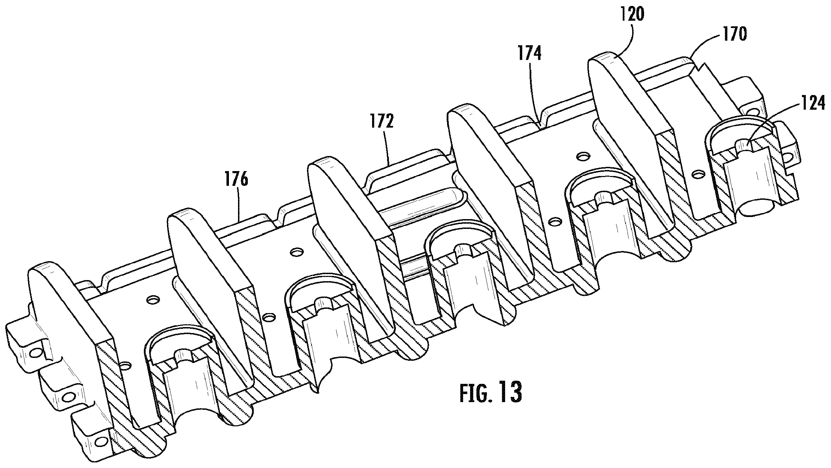

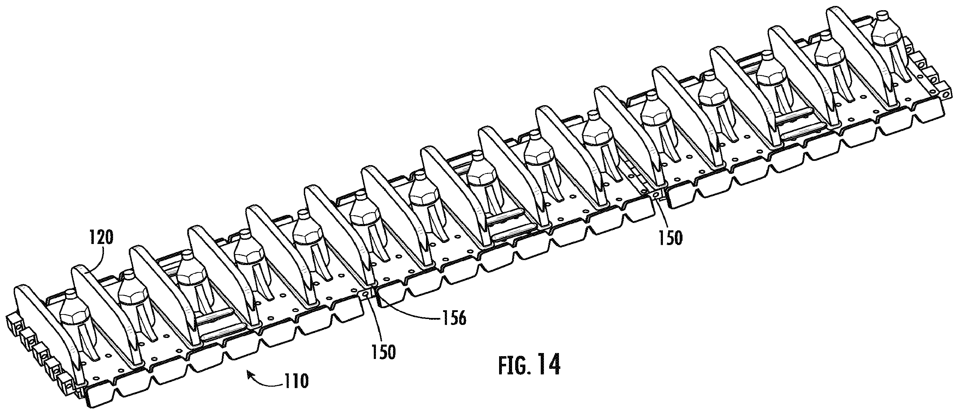

Referring now to Figures 9-14, which depict construction of the segment with reinforcement. It is noted that elastomers used to make a track belt are often reinforced with straps of nylon, steel or other high tensile material to control stretching of the elastomer or creep. In this embodiment, the drive system consists of belt segments 110 that are coupled together to form a continuous track belt with reinforcing straps 140 formed integral with the segment 110. Each segment 110 employs a plurality of elastic engagement stumps 112 protruding from a base member 114 with studs 116 mounted on a distal end 118 of the stumps 112. The base member 114 uses the elastomeric stumps 112 to advance the net cleaning machine by being flexible, eliminating the chance of tearing the net. The stumps 112 engage the net, not shown, providing underwater traction to propel a net cleaner. The stumps 112 flex to insure that, if excessive pressure is applied to the stud 116, the stump will bend and the net will release without damage. Guards 120 provide spacing to prevent the stumps 112 from engaging a cage net.

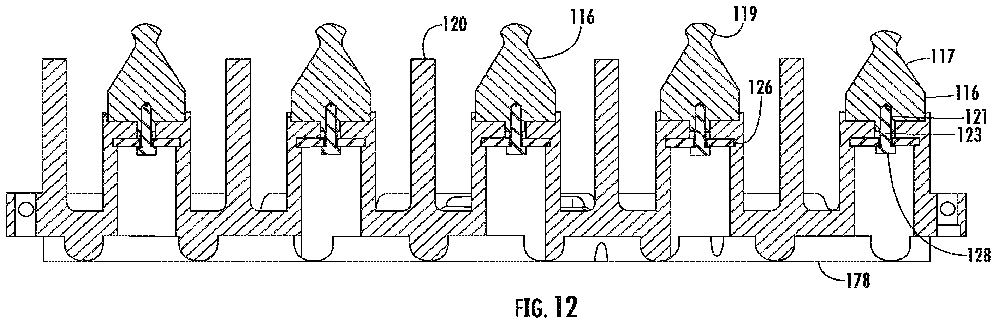

In this embodiment, each stump 112 is produced from 70 to 90 A shore durometer polyurethane, and will bend at a design load to prevent net damage. The guards 120 protruding from the base member 114 of the belt segment 110 have a height slightly less than the height of each stud 116, as depicted in Figure 12. Each stud 116 has a capped head 119 extending to a conical shaped base 117, and is securable to the stump 112 by a receptacle 121 that engages a threaded shank 123 secured to the stump 112. The guards 120 prevent the net from a position lower than the stump 112 and assure that higher than design loads cannot be transferred to the net. Features attached to, or produced with, the stud 116 may be elastomeric, metal, plastic or other suitable feature to engage and act to give traction. In the preferred embodiment, the features are tips that can be made of various shapes, and the guards 120 prevent the net from engaging the stumps 112. In one embodiment, the distal end 118 of the stumps 112 have an aperture 124 for passage of the shank 123, wherein the shank 123 may include a head 128 for use in fastening and a washer 126 to prevent passing the head 128 through the aperture 124.

The base member 114 includes reinforcing straps 140 that are inserted in the mold of the base member 114 in a manner that will encompass connector pins 150. The reinforcing straps 140 surround the apertures 142 that are constructed and arranged to receive a connector pin 150. The straps 140 are wrapped around the connector pins 150 at both the first end 152 and the offset second end 154, each with sufficient length for the ends of the strap 140 to meet and attach at a connection point 160, forming a continuous belted length. With one or more straps 140 installed, the mold can be filled with an elastomeric material, such as polyurethane. The mold contains 3/16 inch diameter rods to create a cavity in the finished part for the inserting of a 3/16 inch connector pin 150; the connector pin 150 to include threaded ends to accept a fastener nut 156 to make segment attachment continuous. With the connection point 160 being sufficiently distanced from the connector pin 150, the molding material grips the strap 140 sufficiently, so that the stress at the holes 142 is very low, thereby preventing failure, namely the loss of an adjoining segment. The current design utilizes several straps, such that the attachment pin in the assembled track is in shear at several points, creating a strong attachment; the straps are constructed from a flexible high tensile material; the segment is molded from liquid elastomers like urethane, or other elastomers and processes. The straps are sloped, as illustrated in Figure 9, such that only one mold is necessary to form male and female connecting segments 110.

The edge of the base member 114 having a first track guide 170 is formed from a plurality of peaks 172 and valleys 174 on a top edge 176 and a bottom edge 178, allowing flexibility as the base member is rotated around a curve and engages the drive wheel track. The edge of the base member 114 also has a second track guide 180 having a plurality of peaks 182 and valleys 184 on a top edge 186 and a bottom edge 188, allowing flexibility as the base member is rotated around a curve.

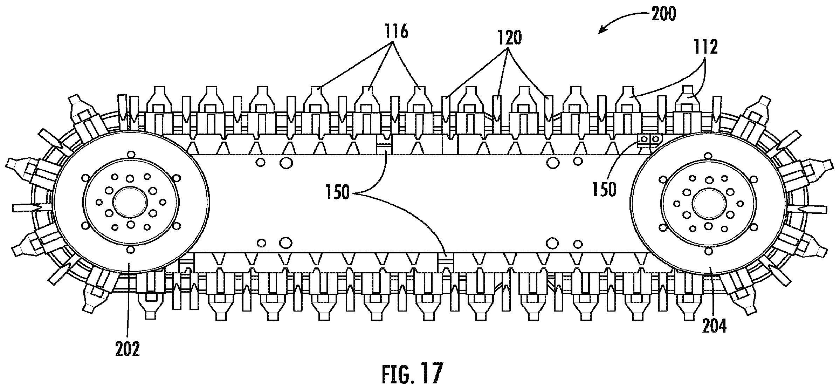

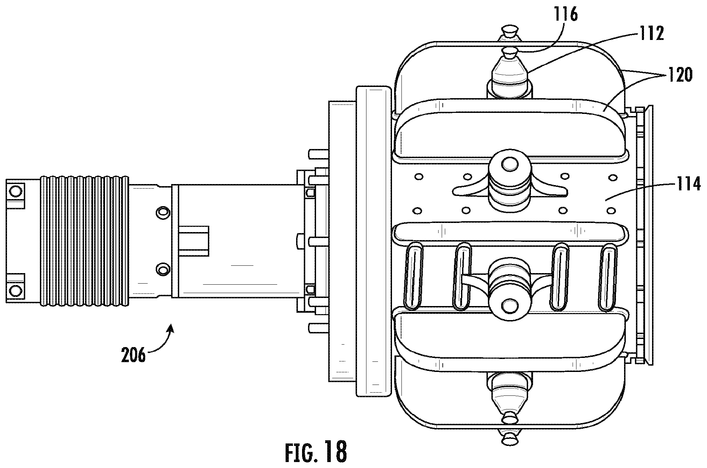

Referring to Figures 15-18, the continuous track belt drive system 200 is used to advance a net cleaner, not shown, on a fish cage net using the belt segments 110 coupled together by the connector pins 150, and wrapped around at least one driving wheel 202 and an opposite wheel 204. The drive wheel 202 is rotated by the drive motor 206, while the opposite wheel 204 need only provide reversal of track belt direction. Each segment of the track belt includes a plurality of flexible stumps 112 protruding from the base member 114, with studs 116 located on the distal end 118 of the stumps 112. The guards 120 protrude from the base member 114 of the belt segment 110, having a height slightly less than the height of each stump stud 116, as illustrated in Figure 17. As previously stated, the guards 120 are constructed and arranged to prevent the net from falling into a position lower than the protruding portion of the stump 112 to assure that higher than design loads cannot be transferred to the net. It is imperative that the drive system does not tear a net. A tear in a net can quickly result in loss of fish through either escape or predator entrance.

All patents and publications mentioned in this specification are indicative of the levels of those skilled in the art to which the invention pertains. It is to be understood that while a certain form of the invention is illustrated, it is not to be limited to the specific form or arrangement herein described and shown. It will be apparent to those skilled in the art that various changes may be made without departing from the scope of the invention as defined in the claims and the invention is not to be considered limited to what is shown and described in the specification and any drawings/figures included herein.

The term "coupled" is defined as connected, although not necessarily directly, and not necessarily mechanically. The use of the word "a" or "an" when used in conjunction with the term "comprising" in the claims and/or the specification may mean "one," but it is also consistent with the meaning of "one or more" or "at least one." The term "about" means, in general, the stated value plus or minus 5%. The use of the term "or" in the claims is used to mean "and/or" unless explicitly indicated to refer to alternatives only or the alternative are mutually exclusive, although the disclosure supports a definition that refers to only alternatives and "and/or."

The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, a method or device that "comprises," "has," "includes" or "contains" one or more steps or elements, possesses those one or more steps or elements, but is not limited to possessing only those one or more elements.

One skilled in the art will readily appreciate that the present invention is well adapted to carry out the objectives and obtain the ends and advantages mentioned, as well as those inherent therein. The embodiments, methods, procedures and techniques described herein are presently representative of the preferred embodiments, are intended to be exemplary, and are not intended as limitations on the scope of the claimed invention. Changes therein and other uses will occur to those skilled in the art which are encompassed within the invention and are defined by the scope of the appended claims. Although the invention has been described in connection with specific preferred embodiments, it should be understood that the invention as claimed should not be unduly limited to such specific embodiments. Indeed, various modifications of the described modes for carrying out the invention which are obvious to those skilled in the art are intended to be within the scope of the following claims.

## Claims

1. A track belt for use with a fish cage net cleaner, said track belt comprising:
a plurality of belt segments (110),
a plurality of flexible stumps (12; 112) formed integral with each said belt segment (110);
each stump having a stud (116) releasably securable thereto, wherein each said stud (116) includes a shape constructed and arranged to engage a net and advance said belt segment (110);
**characterized in that** each belt segment (110) has:
a first end with connectors for receipt of a first connecting pin (150), and a second end with offset connectors for receipt of a second connecting pin (150);
a guard member (120) having a height above the surface of said belt segment (110) equal to or greater than the height of said flexible stumps (112); and
straps (140) formed integral with said belt segment and
extending around each said first end connector and each said second end connector, each said strap (140) having a first end and a second end, said first end secured to the second end at a distance from the connecting pins (150), wherein the distance reduces stress on said connectors.

2. The track belt according to Claim 1 wherein said straps are constructed from a flexible high tensile material.

3. The track belt according to Claim 1 wherein said straps are sloped such that only one mold is necessary to form male and female connecting segments.

4. The track belt according to Claim 1 wherein said flexible stumps (112) are constructed of an elastomer having a durometer between 70 and 90 Snore A.

5. The track belt according to Claim 1 wherein said stumps (112) will fold about 45 degrees at 2-10 Ibs. force (9 - 44 N).

6. The track belt according to Claim 1 wherein said stumps (112) can be selected from either an elastomeric material or a spring.

7. The track belt according to Claim 1 wherein said studs (116) are conical shaped, leading to a capped head.

8. The track belt according to Claim 7 wherein said capped head is between .25 to .5 inches (0,64 - 1,27 cm) outer diameter.

9. The track belt according to Claim 1 wherein said conical shape is sloped between 15 to 45 degrees.

10. The track belt according to Claim 1 wherein said straps (140) are molded within the segment and encompasses the connecting pin (150) placed in said connectors.

## Patentansprüche

1. Förderband zur Verwendung in einem Netzreiniger für Fischkäfige, wobei das Förderband umfasst:
eine Vielzahl von Bandsegmenten (110),
eine Vielzahl von flexiblen Stümpfen (12; 112), die einstückig mit jedem der Bandsegmente (110) ausgebildet sind; wobei jeder Stumpf einen daran lösbar befestigbaren Bolzen (116) aufweist, wobei jeder Bolzen (116) eine Form aufweist, die so ausgebildet und angeordnet ist, dass sie in ein Netz eingreift und das Bandsegment (110) vorwärtsbewegt;
**dadurch gekennzeichnet, dass** jedes Bandsegment (110) aufweist:
ein erstes Ende mit Verbindungselementen zur Aufnahme eines ersten Verbindungsstifts (150) und ein zweites Ende mit versetzten Verbindungselementen zur Aufnahme eines zweiten Verbindungsstifts (150);
ein Schutzelement (120) mit einer Höhe oberhalb der Oberfläche des Bandsegments (110),
die gleich oder größer als die Höhe der flexiblen Stümpfe (112) ist; und
Bänder (140), die einstückig mit den Bandsegmenten ausgebildet sind und
sich um jedes Verbindungselement am ersten Ende und jedes Verbindungselement am zweiten Ende erstrecken, wobei jedes der Bänder (140) ein erstes Ende und ein zweites Ende aufweist, wobei das erste Ende in einem Abstand von den Verbindungsstiften (150) am zweiten Ende befestigt ist, wobei der Abstand die Belastung der Verbindungselemente verringert.

2. Förderband nach Anspruch 1, wobei die Bänder aus einem flexiblen, hochfesten Material bestehen.

3. Förderband nach Anspruch 1, wobei die Bänder derart abgeschrägt sind, dass zur Herstellung von Steck- und Aufnahmeteilen nur eine Form erforderlich ist.

4. Förderband nach Anspruch 1, wobei die flexiblen Stümpfe (112) aus einem Elastomer mit einer Härte zwischen 70 und 90 Shore A hergestellte sind.

5. Förderband nach Anspruch 1, wobei sich die Stümpfe (112) bei einer Kraft von 2-10 lbs. (9-44 N) um etwa 45 Grad biegen.

6. Förderband nach Anspruch 1, wobei die Stümpfe (112) entweder aus einem Elastomermaterial oder aus einer Feder ausgewählt werden können.

7. Förderband nach Anspruch 1, wobei die Bolzen (116) konisch geformt sind und in einen abgedeckten Kopf übergehen.

8. Förderband nach Anspruch 7, wobei der abgedeckte Kopf einen Außendurchmesser zwischen 0,25 und 0,5 Zoll (0,64 - 1,27 cm) aufweist.

9. Förderband nach Anspruch 1, wobei die konische Form eine Neigung zwischen 15 und 45 Grad aufweist.

10. Förderband nach Anspruch 1, wobei die Bänder (140) in das Segment eingegossen sind und den in den Verbindungselementen angeordneten Verbindungsstift (150) umschließen.

## Revendications

1. Courroie chenillée destinée à être utilisée avec un dispositif de nettoyage de filet de cage à poissons, ladite courroie chenillée comprenant :
une pluralité de segments de courroie (110),
une pluralité de tenons flexibles (12 ; 112) formés d'un seul tenant avec chacun desdits segments de courroie (110) ;
chaque tenon ayant un goujon (116) pouvant être fixé de manière amovible à celui-ci, chacun desdits goujons (116) présentant une forme conçue et agencée pour venir en prise avec un filet et faire avancer ledit segment de courroie (110) ;
**caractérisée en ce que** chaque segment de courroie (110) présente :
une première extrémité avec des connecteurs pour la réception
d'un premier axe de liaison (150), et une seconde extrémité avec des connecteurs décalés pour la réception d'un second axe de liaison (150) ;
un élément de protection (120) ayant une hauteur au-dessus de la surface dudit segment de courroie (110) égale ou supérieure à la hauteur desdits tenons flexibles (112) ; et
des sangles (140) formées d'un seul tenant avec ledit segment de courroie
et
s'étendant autour de chacun desdits connecteurs de première extrémité et de chacun desdits connecteurs de seconde extrémité.
chacune desdites sangles (140) ayant une première extrémité et une seconde extrémité, ladite première extrémité étant fixée à la seconde extrémité à une distance des axes de liaison (150), dans laquelle la distance réduit la contrainte sur lesdits connecteurs.

2. Courroie chenillée selon la revendication 1, dans laquelle lesdites sangles sont fabriquées à partir d'un matériau flexible à haute résistance à la traction.

3. Courroie chenillée selon la revendication 1, dans laquelle lesdites sangles sont inclinées de sorte qu'un seul moule est nécessaire pour former les segments de liaison mâle et femelle.

4. Courroie chenillée selon la revendication 1, dans laquelle les tenons flexibles (112) sont fabriqués à partir d'un élastomère ayant une dureté comprise entre 70 et 90 Shore A**.**

5. Courroie chenillée selon la revendication 1, dans laquelle lesdits tenons (112) se plient d'environ 45 degrés sous une force de 2 à 10 livres (9 à 44 N).

6. Courroie chenillée selon la revendication 1, dans laquelle lesdits tenons (112) peuvent être choisis parmi un matériau élastomère ou un ressort.

7. Courroie chenillée selon la revendication 1, dans laquelle lesdits goujons (116) sont de forme conique, menant à une tête coiffée.

8. Courroie chenillée selon la revendication 7, dans laquelle ladite tête coiffée présente un diamètre extérieur compris entre 0,25 à 0,5 pouce (0,64 à 1,27 cm).

9. Courroie chenillée selon la revendication 1, dans laquelle ladite forme conique est inclinée entre 15 à 45 degrés.

10. Courroie chenillée selon la revendication 1, dans laquelle lesdites sangles (140) sont moulées à l'intérieur du segment et englobent l'axe de liaison (150) placé dans lesdits connecteurs.
